# EUROPEAN PATENT SPECIFICATION

(11) **EP 4 351 869 B1**
(45) Date of publication and mention of the grant of the patent: **01.04.2026**
(21) Application number: 22732085.0
(22) Date of filing: 01.06.2022
(51) Int. Cl.: B29C 70/44, B29C 49/04, B29C 51/10, B29C 51/14, B29C 70/46, B29C 70/48, B29C 70/30, B29C 70/54, B29C 33/14, B29C 43/36, B29C 65/00

(54) **METHOD FOR PRODUCING FIBER COMPOSITE PARTS**
VERFAHREN ZUR HERSTELLUNG VON FASERVERBUNDTEILEN
PROCÉDÉ DE FABRICATION DE PARTIES COMPOSITES DE FIBRES

(30) Priority: 10.06.2021 CH 6832021
(43) Date of publication of application: 17.04.2024
(73) Proprietor: Mubea Carbo Tech GmbH, 5020 Salzburg (AT)
(72) Inventor: KARL, Florian, 83346 Bergen (DE)
(74) Representative: Rentsch Partner AG
(86) International application number: PCT/EP2022/064857
(87) International publication number: WO 2022/258447

(56) References cited:
- EP-A1- 2 190 650
- EP-A1- 2 918 404
- DE-A1- 4 106 888
- JP-A- S6 018 326
- US-A- 4 684 423
- US-A9- 2005 006 824

## Description

### FIELD OF THE DISCLOSURE

The present disclosure relates to a method and a device for the production of a hollow or partially hollow fiber composite part.

### BACKGROUND OF THE DISCLOSURE

Methods and devices for the production of hollow fiber composite products are known. In the known processes often an auxiliary body is used, which is inflated inside a mold to press the fibers arranged thereon against a wall of the cavity of the mold, before the part is cured to obtain its final shape.

EP2227377B1, published in the name of the applicant on 15.09.2010 shows a process and an apparatus for manufacturing components made of fiber composites, in particular hollow parts or parts with undercuts, by using three-dimensionally preformed hollow blow molding cores, as a supporting and positioning aid for the fibers and/or prepregs to be processed.

DE102007027755A1, published in the name of BMW AG on 18.12.2008 shows a process for producing a fiber-reinforced plastic component, wherein a thermoplastic hollow core is at least partially coated with a layer of reinforcing fibers and a plastic matrix, which is subsequently cured.

WO08034687A1, published in the name of BSH Bosch and Siemens Home Appliance GmbH on 27.03.2008 shows a method for producing a hot water reservoir wherein an optionally preformed plastic body is surrounded with a fibrous reinforcement material, feeding the surrounded plastic body into a supporting mold, closing the supporting mold, tempering the supporting mold such that the plastic melts, applying a force inside the plastic body such that the molten plastic is pressed to the outside and together with the surrounding fiber material forms a hot water reservoir.

EP1009622B1, published in the name of Volvo Personvagnar AB on 02.01.2003 shows a method for the molding of hollow bodies which comprise at least one layer of reinforced plastic. According to the disclosure, the method can be applied within different areas where there is a need for hollow bodies which comprise reinforced plastic, for example within the area of the manufacture of vehicle components made of reinforced plastic.

US2005006824A9, published on 13.01.2005 relates to a method of manufacturing hollow, fiber reinforced thermoplastic composite articles, such as a pressure vessel. The thermoplastic binder is chosen to bind the reinforcing fibers together, to provide strength, and to provide ease of manufacture. The method includes placing a preform with an inflatable core into a mold, pressurizing the inflatable core, and heating the mold to enable the thermoplastic binder to melt and distribute throughout the preform, binding the reinforcing fibers. The article is then cooled and removed from the mold, resulting in a hollow molded article.

EP2190650A1, published on 02.06.2010 relates to a complex- shaped, three-dimensional fiber reinforced composite structure may be formed by using counteracting pressures applied to a structural lay-up of fiber plies. The fiber plies are arranged on a pressurizable member that may become an integral part of the final product, or may be removed before the product is finalized. The pressurizable member may take the form of a hollow blow molded or rotomolded thermoplastic component or a superplastic formed metallic component having an opening such that the pressurizable member may be vented or pressurized and thus expanded against the fiber plies.

JPS6018326A, published on 30.01.1985 relate to an inner space is formed between a base part and a connecting part extending in parallel with the base part, additional parts obtained by providing a communicating hole communicating with the space on the base is set in a molding space of a molding die, and closing is done by containing parison into the space after the communicating hole has been made to align with an exhaust hole of the molding die. Then compressed gas is blown into the parison which is made to deform along a molding surface of a molding die and the additional parts and wall parts of the parison is made to enter within the space which is made to unify by filling the parison while air in the inside of the space is being exhausted in an external space through the communicating hole and the exhaust hole.

### SUMMARY OF THE DISCLOSURE

A critical aspect of the production process of a hollow fiber composite part or an at least partially hollow non-closed fiber composite part based on the aid of an inflatable auxiliary body is to accurately position the arrangement of the fibers on the auxiliary body during production. The term partially hollow fiber composite part is directed to a non-closed concave body which is only partially surrounding the auxiliary body during production.

Especially when producing products with non-closed bodies or components with undercuts, unwanted slipping or wrinkling of the fibers during expansion of the auxiliary body by inflating and the thereby pressing of the fibers against an inner surface of the cavity of a mold, has to be avoided to obtain a high degree of shape retention and optical appearance from the outside.

To be able to interconnect the fibers to the auxiliary body and keep the fibers in position, usually auxiliary layers or adhesives are used in the processes known from the prior art. These auxiliary layers and adhesives often remain on the component or have to be removed in an additional process step. Depending on the desired properties of the final product, these additional layers or adhesives can be problematic as they usually mix with the resin of the matrix. These inclusions can deteriorate the mechanical properties of the composite part or negatively influence the aesthetic properties, e.g. when the fibers of the composite product shall be visible from the outside across at least partially transparent matrix material.

In the method according to the present disclosure, for producing of a hollow or an at least partially hollow fiber composite part at least one layer of reinforcing fibers is embedded in a matrix material. At least one balloon-shaped inflatable auxiliary body is provided which encompasses a closed volume and is at least partially made from e.g. an expandable film. One advantage of the method is that fiber composite parts with highly variable surface geometries can be produced. Also fiber composite parts can be produced wherein the balloon-shaped inflatable auxiliary body is only partially covered. In a variation of the method preformed auxiliary layers can be arranged between an outer surface of the auxiliary body and the at least one layer of reinforcing fibers. In the following throughout the present disclosure the term auxiliary body is used as a substitute for the term balloon-shaped inflatable auxiliary body. The terms are to be regarded as mutually interchangeable and equivalent. The auxiliary body is preferably produced from a thermally deformable material. Depending on the application typically the following materials can be used: e.g. polypropylene (PP), polyethylene terephthalate (PET), polycarbonate (PC), polyamides (PA), polymethyl methacrylate (PMMA), polybutylene terephthalate (PBT, PBTP), polyurethane (PUR), acrylic films. The material is chosen depending on the manufacturing process of the auxiliary body. In a preferred variation the auxiliary body can comprise at least one opening for the introduction of a fluid to increase the internal volume. Alternatively, or in addition the auxiliary body can also be inflated by using a propellant to increase the internal volume.

The auxiliary body usually comprises an outer surface with at least one zone which is suitable to receive a retaining clip therein. The use of a retaining clip e.g. allows to produce fiber composite parts with undercuts, such that all outer sides of the hollow or at least partially hollow fiber composite part have a flawless surface. As the retaining clip locally fixates the at least one layer of reinforcing fibers to the at least one zone, unwanted slipping and wrinkling can be avoided or at least be substantially reduced.

As the auxiliary body is made as a balloon-shaped inflatable auxiliary body, the outer surface of the expandable film should usually not be penetrated in an unwanted manner, e.g. by penetrating the outer surface by the retaining clip. Holes caused for example by the retaining clip could cause a leakage of the balloon-shaped body, preventing that the auxiliary body can be inflated in the desired manner. Alternatively, an auxiliary body can be used wherein the outer surface has a construction with self-sealing properties. In an alternative variation or in addition, the retaining clip can be designed such that the holes caused by the penetration of the auxiliary body by the retaining clip, are sealed by the retaining clip itself such that no leakage occurs. It should be prevented that inflated fluid, e.g. air or a propellant, can leak from the internal volume of the balloon-shaped auxiliary body through such holes and negatively impact the quality of the fiber composite part. For example, inclusions, e.g. air bubbles in the matrix material, may deteriorate the mechanical and aesthetic properties of the fiber composite part. To avoid that the outer surface of the balloon-shaped auxiliary body is penetrated by the retaining clip, the at least one zone is preferably designed as a pad and/or a rib forming an integral part of the auxiliary body. Alternatively or in addition, the pad and/or rib can also be interconnected to the outer surface, e.g. by gluing or welding. In this variation the pad and/or rib may be arranged in form of a thickening which is designed such that an inserted retaining clip does not penetrate through the expandable film of the auxiliary body but only penetrates into the thickening. Good results can be achieved with the method when the at least one zone is designed as an insert which is embedded into the outer surface of the auxiliary body. Preferably a mounting surface of the insert is essentially flush with the surrounding outer surface of the auxiliary body. In a preferred variation of the method the at least one insert comprises an undercut designed to be at least partially encompassed by the expandable film of the auxiliary body. Good results can be achieved when the insert is made by a polymer in form of a chip or a rectangular plate. To make it easier for an operator to fix the at least one layer of reinforcing fibers onto the at least one zone of the auxiliary body with a retaining clip, the at least one zone can comprise an insert which is made of a softer material compared to the material of the auxiliary body.

During production at least one layer of reinforcing fibers is arranged on the outer surface of the auxiliary body and at least one layer of reinforcing fibers is fixed to the zone by at least one retaining clip from the outside. In a preferred variation the at least one layer of reinforcing fibers is applied in form of a dry woven fabric and/or in the form of continuous fibers. The dry woven fabric and/or the continuous fibers may be prepared by wrapping and/or in the form of prepregs. The fibers of the at least one layer of reinforcing fibers are typically bonded to one another by means of RTM by the matrix material. Therefore, a mold is provided which comprises a cavity and the auxiliary body and the thereon arranged at least one layer of reinforcing fibers is arranged at least partially in the cavity. The at least one layer of reinforcing fibers is arranged in a gap between the outer surface of the auxiliary body and an inner surface of the cavity. The auxiliary body is inflated to a defined extend and the gap and the therein arranged at least one layer of reinforcing fibers is flooded with a matrix material. Preferably a modified resin transfer molding process (RTM) is used wherein the at least one layer of reinforcing fibers is typically a layer of dry fibers. After the mold is closed preferably a resin-hardener mixture from a mixing and metering unit is injected between the outer wall of the cavity and the auxiliary body such that the at least one layer of reinforced fibers is impregnated. To increase the adhesion of the at least one layer of reinforcing fibers to the outer surface of the auxiliary body, the inner wall of the cavity of the mold can have a rough or textured surface. During the production of the fiber composite part, especially while flooding the gap with a matrix material, high forces are applied onto the retaining clip and the thereto interconnected zone. When the zone comprises an insert, the at least one insert can comprise an undercut to prevent that the at least one insert is detached form the auxiliary body by the high forces. Good results can be achieved when the undercut of the insert is designed as a chamfer. Alternatively, also other geometries are possible. In another variation the at least one insert has a shape essentially formed like a mushroom on the side facing the closed volume of the auxiliary body.

In a next step, the auxiliary body is inflated such that the gap is reduced and the at least one layer of reinforcing fibers is pressed against the inner surface of the cavity of the mold by the outer surface of the auxiliary body. Typically, by creating a pressure difference, the at least one layer of reinforcing fibers is pressed against the outer wall of the cavity such that the fiber composite part acquires its final geometry. The pressure difference is preferably generated by filling the auxiliary body from the outside, e.g. by means of compressed air. Alternatively, or as a supplement, the auxiliary body is filled with a defined volume of gas and then sealed. In a preferred variation the cavity is vacuumed by at least one suction means to remove remaining air from the cavity. In a next step the matrix material is cured. The matrix material is typically cured by heating the mold to accelerates the curing of the injected resin (e.g. epoxy). One advantage of the resin transfer molding process according to the disclosure is that hollow blow molded fiber composite components and/or blow molded fiber composite components with undercuts can be produced. A further advantage is the possibility of producing complex geometries and/or to integrate functional components into the component (e.g. metal inserts as connecting elements). After curing the matrix material, the hollow or at least partially hollow fiber composite part comprising the at least one layer of reinforcing fibers embedded in the matrix material is removed from the cavity. Depending on the geometry and the desired mechanical and aesthetic properties, the auxiliary body can remain with the fiber composite part or alternatively be removed. In a preferred variation of the method the auxiliary body is removed from the fiber composite part outside of the cavity. Preferably, the auxiliary body is removed through an opening in the fiber composite part after the fibers have been bonded together by the matrix material.

Depending on the geometry of the desired fiber composite part, the auxiliary body can comprise undercuts or complex geometries. To make it easier for the operator to position the retaining clip at the at least one zone which is suitable to receive a retaining clip therein and to avoid that the auxiliary body is penetrated by the retaining clip in an unwanted manner, the method can comprise a positioning aid. Preferably , the positioning aid for the retaining clip is an auxiliary frame designed as a template for positioning the at least one retaining clip. After arranging the at least one layer of reinforcing fibers onto the outer surface of the auxiliary body, it is difficult to localize the exact position of the at least one insert. To prevent that the auxiliary body is damaged and leaks, the positioning aid can be used to localize the zone. Especially with geometries comprising an undercut, a positioning aid designed as a template can be used which has an outer contour essentially corresponding to the contour of the undercut. Preferably such a template can be placed onto the at least one layer of fibers arranged onto the auxiliary body and comprises at least one cut-out that is arranged essentially congruent to the at least one zone, such that the retaining clip can be position stable interconnected to the at least one zone. Alternatively, the zone of the outer surface comprises a positioning aid for the retaining clip such that the retaining clip is arranged essentially centered at the at least one zone. Good results can be achieved particularly for an automated process, wherein the retaining clip is fixed to the at least one zone of the auxiliary body. It can be beneficial if a positioning aid is arranged at or within the at least one zone. The positioning aid can be a RFID tag or any other radio element configured to guide a device for placing the retaining clip or indicate the position of the at least one zone to the device.

The inflatable auxiliary body for producing a fiber composite part according the method of the present disclosure comprises an auxiliary body which is made from an expandable film and designed to encompass a closed volume and wherein the inflatable auxiliary body comprises an outer surface with at least one zone suitable to receive a retaining clip. In a preferred variation of the method the auxiliary body is formed by blow-molding an expandable film. Therefore, liquid plastic is typically pressed out of a nozzle in the form of a ring such that a tube is formed. After reaching a certain length the tube is squeezed at the bottom end and then inflated after being placed in a closed blow mold provided for this purpose. Preferably the auxiliary body has a geometry which is designed being constantly or variably 1% to 20% smaller than the geometry of the cavity of the mold.

In a variation where the zone of the auxiliary body comprises at least one insert, the at least one insert can preferably be placed within a tool. Good results can be achieved when the at least one insert is temporarily held inside a cavity of a tool to form the auxiliary body by at least one suction means such that the insert is drawn against the inner surface of the cavity. The at least one suction means may be designed as a bore within the wall of the cavity of the tool. The suction means is configured to pull the at least one insert against the wall of the cavity and to fix the at least one insert securely in position. After arranging the at least one insert in the tool, the preferably preformed balloon-shaped auxiliary body is placed in the tool. In a preferred variation the auxiliary body comprises at least one connector configured to interconnect the auxiliary body to a counter connector arranged at the mold. After closing the production mold the at least one auxiliary body is inflated within the cavity of the production mold. The auxiliary body is pressed against the wall of the cavity of the tool and the tool is heated up such that the film of the auxiliary body at least partially plasticizes. Alternatively, also the auxiliary body can be inflated with a medium which is hot enough such that the auxiliary body at least partially plasticizes. The at least partially plasticized expandable film of the auxiliary body is configured to at least partially enclose the at least one insert. In a preferred variation the at least one insert is designed with an undercut. The undercut of the insert can be at least partially embedded by the at least partially practiced expandable film of the auxiliary body.

When the auxiliary body is made by blow molding, the at least one insert may also be arranged within the blow-mold before the auxiliary body is blow molded. The insert can be arranged in the mold by a form lock or by a force lock. Preferably the at least one insert is arranged at the inner surface of the cavity of the blow-mold, such that the insert embedded into the expandable film and flush with the surrounding expandable film of the auxiliary body. Alternatively, the auxiliary body can be also made in a first step and the at least one insert is later on embedded into the auxiliary body. Therefore, the auxiliary body is heated up and at least partially plasticized such that the at least one insert can be encompassed by the at least partially plasticized expandable film of the auxiliary body. The at least one insert can also be at least partially plasticized such that the material of the at least one insert and the material of the expandable film of the auxiliary body at least partially mix.

At least one layer of reinforcing fibers is arranged on the outer surface of the auxiliary body and at least one layer of reinforcing fibers is fixed to the zone by at least one retaining clip from the outside. The auxiliary body is designed such that it is self-stable in an inflated state. A self-table auxiliary body has the advantage that the at least one layer of reinforcing fibers can be arranged on the outer surface and the at least one layer of reinforcing fibers can be fixed to the at least one zone by at least one retaining clip from the outside without the need to constantly keep the auxiliary body under pressure. Therefore, the auxiliary body can be blow molded, after the curing be removed from the mold and the at least one layer of reinforcing fibers can be arranged outside the mold.

Depending on the production volume it can be more cost efficient to produce the auxiliary body by injection molding. Good results can be achieved when the auxiliary body is made from at least two parts which are interconnected to each other along at least one joint by welding or gluing. To be able to arrange a rib or a patch at the inner surface of the auxiliary body, the auxiliary body is preferably made from at least two parts. The two parts can be injection molded and joined together. Preferably, the at least two parts are welded together in form of a butt-joint. Depending on the geometry of the desired fiber composite part, it is preferable to produce the auxiliary body with more than one chamber. In a preferred variation the auxiliary body comprises at least two chambers which chambers are fluidly interconnected to each other. As the auxiliary body is preferably made by injection and/or blow molding, in a variation wherein the auxiliary body comprises at least two chambers, the at least two chambers of the auxiliary body can be made in an integral manner. Alternatively, the at least two chambers can be made separately and joint together.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: shows a schematic cross-sectional view of a first embodiment of the auxiliary body with thereon arranged layer of reinforcing fibers;
- Fig. 2: shows a schematic perspective view of a mold and an exemplary embodiment of an auxiliary body with thereon arranged layer of reinforcing fibers for producing a fiber composite part;
- Fig. 3: shows a schematic cross-sectional view of a mold and a therein placed auxiliary body for producing a fiber composite part;
- Fig. 4: shows a schematic cross-sectional view of a cut-out of an auxiliary body and thereon fixed layer of reinforcing fibers;
- Fig. 5: shows a schematic cross-sectional view of an embodiment of an auxiliary body with two chambers and a positioning aid;
- Fig. 6: shows a schematic perspective view of an exemplary embodiment of an auxiliary body with two chambers;
- Fig. 7: shows a schematic cross-sectional view of a tool and a therein placed auxiliary body.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

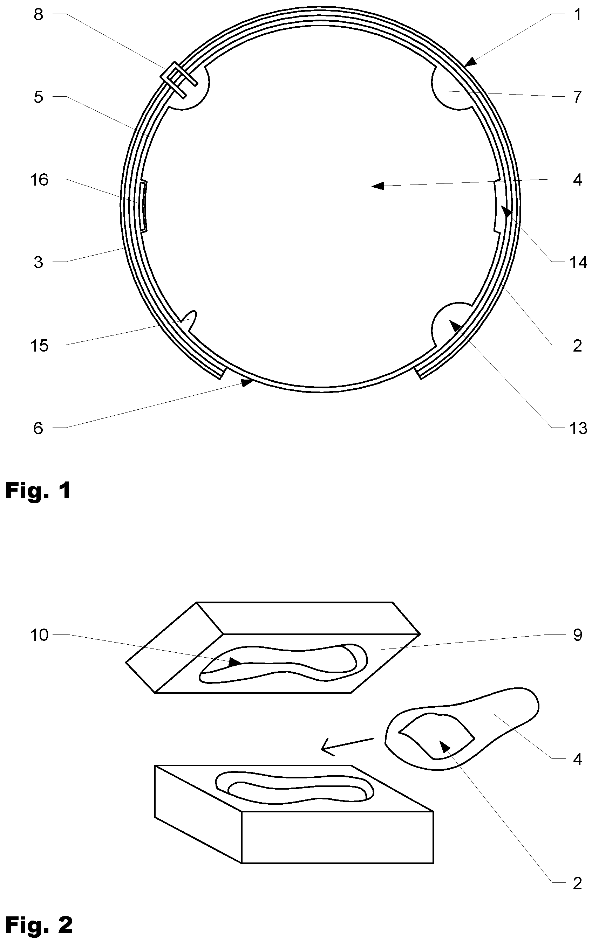

**Figure 1** shows a schematic cross-sectional view of a first embodiment of the auxiliary body 4 with thereon arranged layer of reinforcing fibers 2. The shown auxiliary body 4 is designed as a balloon-shaped inflatable auxiliary body 4 for producing a fiber composite part 1 which is made from an expandable film 5 designed to encompass a closed volume. The shown auxiliary body 4 comprises an outer surface 6 with several zones 7, wherein each zone 7 is designed to receive at least one retaining clip 8. As best visible in **Figure 1****,** the method for producing a fiber composite part 1 comprises at least one layer of reinforcing fibers 2 which is then embedded in a matrix material 3. The at least one layer of reinforcing fibers 2 is arranged on the outer surface 6 of the auxiliary body 4 and fixed to the zone 7 by at least one retaining clip 8 from the outside. The zone 7 can be designed as a thickening 13 or it can be designed as a pad 14 and/or a rib 15 and/or comprise an insert 16. In the shown embodiment the insert 16 is designed as a pad 14. The at least one zone 7 is made in an integral manner with the outer surface 6 of the auxiliary body 4.

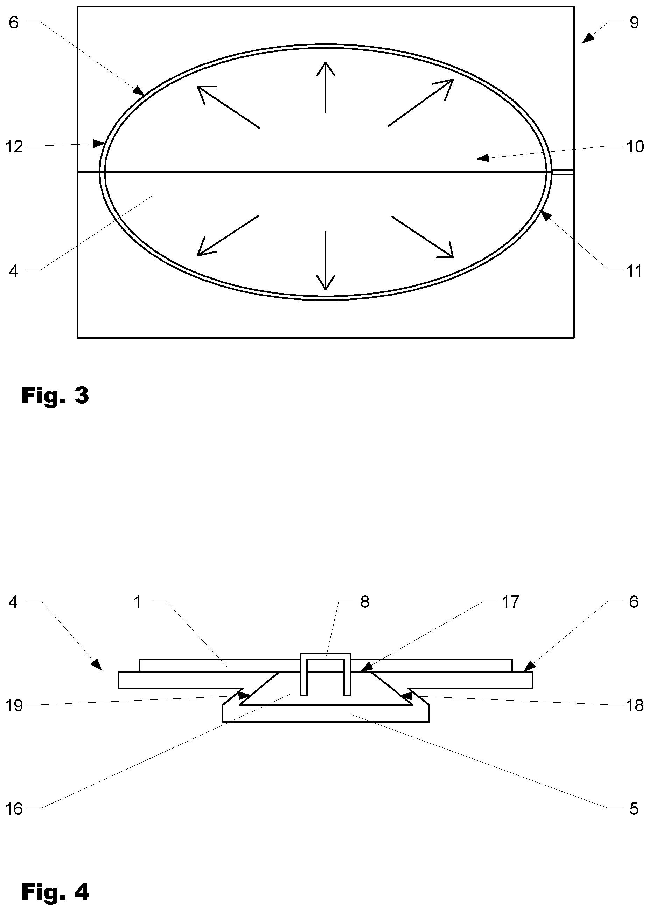

**Figure 2** shows a schematic perspective view of a mold 9 and an exemplary embodiment of an auxiliary body 4 with thereon arranged layer of reinforcing fibers 2 for producing a fiber composite part 1. As best visible in **Figure 2** a mold 9 is provided which comprises a cavity 10 in which cavity 10 the auxiliary body 4 and the thereon arranged at least one layer of reinforcing fibers 2 is arranged. **Figure 3** shows a schematic cross-sectional view of a mold 9 and a therein placed auxiliary body 4 for producing a fiber composite part 1. When producing the hollow or at least partially hollow fiber composite part 1 the shown auxiliary body 4 is inflated to a defined extend and the remaining gap 11 between the auxiliary body 4 and the inner surface 12 of the cavity 10 is flooded with a matrix material 3. The auxiliary body 4 is inflated such that the gap 11 is reduced and the at least one layer of reinforcing fibers 2 is pressed against the inner surface 12 of the cavity 10 of the mold 9 by the outer surface 6 of the auxiliary body 4. The shown mold 9 comprises a relief opening 29, which is designed such that excessive matrix material 3 is pressed out of the cavity 10 through the relief opening 29. After curing the matrix material 3 within the cavity 10 of the mold 9, the at least one layer of reinforcing fibers 2 embedded in the matrix material 3 is removed from the cavity 10. Depending on the geometry and purpose of the fiber composite part 1, the auxiliary body 4 is removed from the fiber composite part 2 outside of the cavity 10.

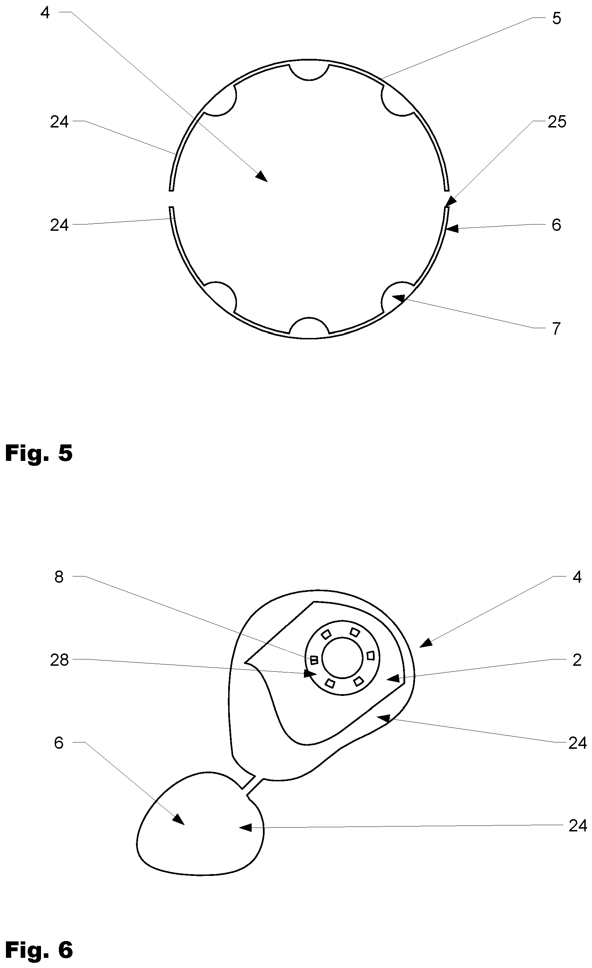

**Figure 4** shows a schematic cross-sectional view of a cut-out of an auxiliary body 4 and thereon fixed layer of reinforcing fibers 2. As best visible in **Figure 4****,** the shown insert 16 comprises an undercut 18 which is designed to be encompassed by the expandable film 5 of the auxiliary body 4. In the shown embodiment the insert 16 is embedded into the outer surface 6 of the auxiliary body 4 such that a mounting surface 17 of the insert 16 is essentially flush with the surrounding outer surface 6. To increase the mechanical stability of the embedded insert 16, the undercut 18 of the insert 16 is designed as a chamfer 19 which is arranged substantially along the entire circumference of the insert 16. To make it easier for the user to insert the retaining clip 8, the insert 16 can be made from a softer material than the auxiliary body 4. **Figure 5** shows a schematic cross-sectional view of an embodiment of an auxiliary body 4 with two chambers 26 and a positioning aid 27. As best visible in **Figure 5****,** in another embodiment the auxiliary body 4 is made from at least two parts 24 which are interconnected to each other along at least one joint 25, preferably by welding or gluing. **Figure 6** shows a schematic perspective view of an exemplary embodiment of an auxiliary body 4 with two chambers 26. The at least two chambers 26 are preferably fluidly interconnected to each other. For a more precise fixing of the retaining clips 8, a positioning aid 27 for the retaining clip 8 can be used. The shown positioning aid 27 is designed as an auxiliary frame designed as a template 28 for positioning the at least one retaining clip 8. Alternatively, the zone 7 of the outer surface 6 can comprises a positioning aid 27 for the retaining clip 8 such that the retaining clip 8 is arranged essentially centered at the at least one zone 6.

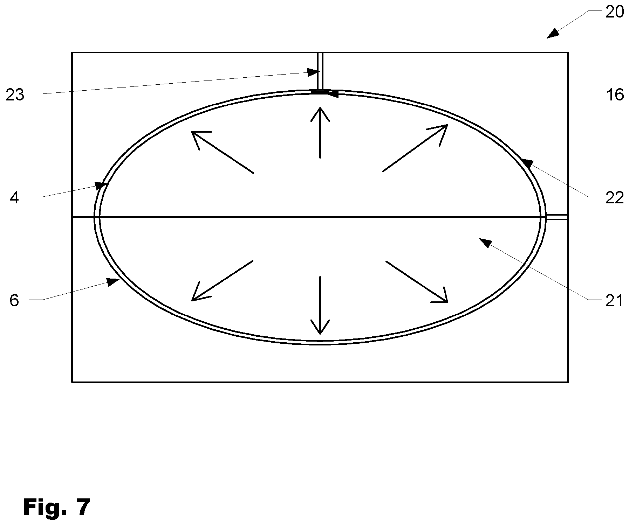

**Figure 7** shows a schematic cross-sectional view of a tool 20 and a therein placed auxiliary body 4. The shown auxiliary body 4 can be made by blow-molding an expandable film 5 and is designed such that it is self-stable in an inflated state. Preferably the auxiliary body 4 can have a geometry which is designed being constantly or variably 1% to 20% smaller than the geometry of the cavity 10 of the mold 9. The preformed auxiliary body 4 may be placed inside a cavity 21 of a tool 20 to form the auxiliary body 4. At least one suction means 23 is preferably arranged at and/or in the wall of the cavity 21. The suction means 23 is configured to draw the insert 16 against the inner surface 22 of the cavity 21 of the tool 20. In the shown embodiment the at least one suction means 23 is designed as a bore within the wall of the cavity 21 of the tool 10 and fixes the at least one insert 16 securely in position. The auxiliary body 4 is then pressed against the wall of the cavity 21 of the tool 20. In a first variation the tool 20 is heated up such that the expandable film 5 of the auxiliary body 4 at least partially plasticizes. Alternatively, the auxiliary body 4 can be inflated with a medium which is hot enough such that the auxiliary body 4 at least partially plasticizes. The at least partially plasticized expandable film 5 of the auxiliary body 4 is configured to at least partially enclose the at least one insert 16.

Rather, the words used in the specification are words of description rather than limitation, and it is understood that various changes may be made without departing from the scope of the invention that is defined by the appended claims.

### LIST OF DESIGNATIONS

- 1: Fiber composite part
- 2: Layer of reinforcing fibers
- 3: Matrix material
- 4: Auxiliary body
- 5: Expandable Film
- 6: Outer surface (auxiliary body)
- 7: Zone (outer surface)
- 8: Retaining clip
- 9: Mold
- 10: Cavity (mold)
- 11: Gap
- 12: Inner surface (cavity)
- 13: Thickening (zone)
- 14: Pad
- 15: Rib
- 16: Insert
- 17: Mounting surface
- 18: Undercut (insert)
- 19: Chamfer (undercut)
- 20: Tool
- 21: Cavity (tool)
- 22: Inner surface (tool)
- 23: Suction means
- 24: Two parts (auxiliary body)
- 25: Joint (auxiliary body)
- 26: Two chambers (auxiliary body)
- 27: Positioning aid
- 28: Template (positioning aid)
- 29: Relief opening

## Claims

1. Method for producing of a hollow or at least partially hollow fiber composite part (1) comprising at least one layer of reinforcing fibers (2) embedded in a matrix material (3), comprising the following method steps:
a. Providing at least one balloon-shaped inflatable auxiliary body (4) which is encompassing a closed volume and which is at least partially made from an expandable film (5), wherein the auxiliary body (4) comprises an outer surface (6) with at least one zone (7) suitable to receive a retaining clip (8) therein;
b. Arranging at least one layer of reinforcing fibers (2) on the outer surface (6) and fixing said at least one layer of reinforcing fibers (2) to the zone (7) by at least one retaining clip (8) from the outside;
c. Providing a mold (9) comprising a cavity (10) and arranging the auxiliary body (4) and the thereon arranged at least one layer of reinforcing fibers (2) at least partially in the cavity (10) such that the at least one layer of reinforcing fibers (2) is arranged in a gap (11) between the outer surface (6) of the auxiliary body (4) and an inner surface (12) of the cavity (10);
d. Inflating the auxiliary body (4) to a defined extend and flooding the gap (11) and the therein arranged at least one layer of reinforcing fibers (2) with a matrix material (3);
e. Inflating the auxiliary body (4) such that the gap (11) is reduced and the at least one layer of reinforcing fibers (2) is pressed against the inner surface (12) of the cavity (10) of the mold (9) by the outer surface (6) of the auxiliary body (4)
f. Curing the matrix material (3);
g. Removing the hollow or at least partially hollow fiber composite part (1) comprising the at least one layer of reinforcing fibers (2) embedded in the matrix material (3) from the cavity (10).

2. Method according to claim 1, **wherein** the at least one zone (7) is designed as a pad (14) and/or a rib (15) forming an integral part of the auxiliary body (4).

3. Method according to at least one of the preceding claims, **wherein** the at least one zone (7) is designed as an insert (16) which is embedded into the outer surface (6) of the auxiliary body (4) such that a mounting surface (17) of the insert (16) is essentially flush with the surrounding outer surface (6) of the auxiliary body (4).

4. Method according to claim 3, **wherein** the at least one insert (16) comprises an undercut (18) designed to be at least partially encompassed by the expandable film (5) of the auxiliary body (4).

5. Method according to claim 4, **wherein** the undercut (18) of the insert (16) is designed as a chamfer (19).

6. Method according to at least one of the claims 3 to 5, **wherein** the at least one insert (16) is temporarily held inside a cavity (21) of a tool (20) to form the auxiliary body (4) by at least one suction means (23) such that the insert (16) is drawn against the inner surface (22) of the cavity (21).

7. Method according to at least one of the preceding claims, **wherein** the auxiliary body (4) is formed by blow-molding an expandable film (5).

8. Method according to at least one of the preceding claims, **wherein** the auxiliary body (4) is designed such that it is self-stable in an inflated state.

9. Method according to at least one of the preceding claims, **wherein** the auxiliary body (4) is removed from the fiber composite part (2) outside of the cavity (10) of the mold (9).

10. Method according to at least one of the preceding claims, **wherein** the auxiliary body (4) is made from at least two parts (24) interconnected to each other along at least one joint (25) by welding or gluing.

11. Method according to at least one of the preceding claims, **wherein** the auxiliary body (4) comprises at least two chambers (26) fluidly interconnected to each other.

12. Method according to at least one of the preceding claims, **wherein** the method comprises a positioning aid (27) for the retaining clip (8) which positioning aid (27) is an auxiliary frame designed as a template (28) for positioning the at least one retaining clip (8).

13. Method according to at least one of the preceding claims, **wherein** the zone (7) of the outer surface (6) comprises a positioning aid (27) for the retaining clip (8) such that the retaining clip (8) is arranged essentially centered at the at least one zone (7).

14. An inflatable auxiliary body (4) for producing a fiber composite part (1) in the method according at least one of the claims 1 through 13, wherein the auxiliary body (4) is made from an expandable film (5) designed to encompass a closed volume and wherein the inflatable auxiliary body (4) comprises an outer surface (6) with at least one zone (7) suitable to receive a retaining clip (8).

## Patentansprüche

1. Verfahren zum Herstellen eines hohlen oder zumindest teilweise hohlen Faserverbundbauteils (1), das mindestens eine Verstärkungsfaserschicht (2) umfasst, die in ein Matrixmaterial (3) eingebettet ist, umfassend die folgenden Verfahrensschritte:
a. Bereitstellen mindestens eines ballonförmigen befüllbaren Hilfskörpers (4), der ein geschlossenes Volumen einschliesst und zumindest teilweise aus einer dehnbaren Folie (5) besteht, wobei der Hilfskörper (4) eine Aussenfläche (6) mit mindestens einer Zone (7) aufweist, die zur Aufnahme einer Halteklammer (8) geeignet ist;
b. Anordnen mindestens einer Verstärkungsfaserschicht (2) auf der Aussenfläche (6) und Befestigen der mindestens eine Verstärkungsfaserschicht (2) an der Zone (7) durch mindestens eine Halteklammer (8) von aussen;
c. Bereitstellen einer Form (9) umfassend einen Formhohlraum (10) und Anordnen des Hilfskörpers (4) und der darauf angeordneten mindestens eine Verstärkungsfaserschicht (2) zumindest teilweise in dem Formhohlraum (10), so dass die mindestens eine Verstärkungsfaserschicht (2) in einem Spalt (11) zwischen der Aussenfläche (6) des Hilfskörpers (4) und einer Innenfläche (12) des Formhohlraums (10) angeordnet ist;
d. Befüllen des Hilfskörpers (4) bis zu einem definierten Mass und Fluten des Spalts (11) sowie der darin angeordneten mindestens einer Verstärkungsfaserschicht (2) mit Matrixmaterial (3);
e. Befüllen des Hilfskörpers (4) derart, dass der Spalt (11) verringert wird und die mindestens eine Verstärkungsfaserschicht (2) durch die Aussenfläche (6) des Hilfskörpers (4) gegen die Innenfläche (12) des Formhohlraums (10) gepresst wird
f. Aushärten des Matrixmaterials (3);
g. Entfernung des hohlen oder zumindest teilweise hohlen Faserverbundbauteils (1), das die mindestens eine Verstärkungsfaserschicht (2) umfasst, die in das Matrixmaterial (3) eingebettet ist, aus dem Formhohlraum (10).

2. Verfahren gemäss Anspruch 1, **wobei** die mindestens eine Zone (7) als ein Polster (14) und/oder eine Rippe (15) ausgebildet ist, die einen integralen Bestandteil des Hilfskörpers (4) bildet.

3. Verfahren gemäss mindestens einem der vorangehenden Ansprüche, **wobei** die mindestens eine Zone (7) als Einsatz (16) ausgebildet ist, der in die Aussenfläche (6) des Hilfskörpers (4) eingebettet ist, so dass eine Montagefläche (17) des Einsatzes (16) im Wesentlichen bündig mit der umgebenden Aussenfläche (6) des Hilfskörpers (4) ist.

4. Verfahren gemäss Anspruch 3, **wobei** der mindestens eine Einsatz (16) eine Hinterschneidung (18) umfasst, die so ausgebildet ist, dass sie zumindest teilweise von der dehnbaren Folie (5) des Hilfskörpers (4) umschlossen wird.

5. Verfahren gemäss Anspruch 4, **wobei** die Hinterschneidung (18) des Einsatzes (16) als Fase (19) ausgebildet ist.

6. Verfahren gemäss mindestens einem der Ansprüche 3 bis 5, **wobei** der mindestens eine Einsatz (16) vorübergehend in einem Formhohlraum (21) eines Werkzeugs (20) zur Bildung des Hilfskörpers (4) durch mindestens ein Saugmittel (23) gehalten wird, so dass der Einsatz (16) gegen die Innenfläche (22) des Formhohlraums (21) gezogen wird.

7. Verfahren gemäss mindestens einem der vorangehenden Ansprüche, **wobei** der Hilfskörper (4) durch Blasformen einer dehnbaren Folie (5) gebildet wird.

8. Verfahren gemäss mindestens einem der vorangehenden Ansprüche, **wobei** der Hilfskörper (4) so ausgebildet ist, dass er im befüllten Zustand formstabil ist.

9. Verfahren gemäss mindestens einem der vorangehenden Ansprüche, **wobei** der Hilfskörper (4) ausserhalb des Formhohlraums (10) der Form (9) aus dem Faserverbundbauteil (2) entfernt wird.

10. Verfahren gemäss mindestens einem der vorangehenden Ansprüche, **wobei** der Hilfskörper (4) aus mindestens zwei Teilen (24) besteht, die entlang mindestens einer Fügestelle (25) durch Schweissen oder Kleben miteinander verbunden sind.

11. Verfahren gemäss mindestens einem der vorangehenden Ansprüche, **wobei** der Hilfskörper (4) mindestens zwei Kammern (26) umfasst, die fluidisch miteinander verbunden sind.

12. Verfahren gemäss mindestens einem der vorangehenden Ansprüche, **wobei** das Verfahren eine Positionierhilfe (27) für die Halteklammer (8) umfasst, wobei die Positionierhilfe (27) ein Hilfsrahmen ist, der als Schablone (28) zum Positionieren der mindestens einen Halteklammer (8) ausgebildet ist.

13. Verfahren gemäss mindestens einem der vorangehenden Ansprüche, **wobei** die Zone (7) der Aussenfläche (6) eine Positionierhilfe (27) für die Halteklammer (8) umfasst, so dass die Halteklammer (8) im Wesentlichen zentriert an der mindestens einen Zone (7) angeordnet ist.

14. Befüllbarer Hilfskörper (4) zum Herstellen eines Faserverbundbauteils (1) nach dem Verfahren gemäss mindestens einem der Ansprüche1 bis 13 , wobei der Hilfskörper (4) aus einer dehnbaren Folie (5) hergestellt ist, die so ausgelegt ist, dass sie ein geschlossenes Volumen einschliesst, und wobei der befüllbare Hilfskörper (4) eine Aussenfläche (6) mit mindestens einer Zone (7) umfasst, die zur Aufnahme einer Halteklammer (8) geeignet ist.

## Revendications

1. Procédé de fabrication d'une pièce composite à fibres creuse ou au moins partiellement creuse (1) comprenant au moins une couche de fibres de renfort (2) incorporées dans un matériau de matrice (3), comprenant les étapes suivantes :
a. Fournir au moins un corps auxiliaire remplissable de forme ballon (4) qui délimite un volume fermé et qui est au moins partiellement constitué d'un film extensible (5), dans lequel le corps auxiliaire (4) comprend une surface externe (6) avec au moins une zone (7) adaptée pour recevoir un clip de retenue (8) ;
b. Disposition d'au moins une couche de fibres de renfort (2) sur la surface externe (6) et fixation de ladite au moins une couche de fibres de renfort (2) à la zone (7) à l'aide d'au moins un clip de retenue (8) depuis l'extérieur ;
c. Fournir un moule (9) comprenant une cavité (10) et disposer le corps auxiliaire (4) et la au moins une couche de fibres de renfort (2) disposée sur celui-ci au moins partiellement dans la cavité (10) de telle sorte que la au moins une couche de fibres de renfort (2) soit disposée dans un espace (11) entre la surface externe (6) du corps auxiliaire (4) et une surface interne (12) de la cavité (10) ;
d. Remplir le corps auxiliaire (4) jusqu'à une extension définie et inonder l'espace (11) et au moins une couche de fibres de renfort (2) qui y est disposée avec un matériau de matrice (3) ;
e. Remplir le corps auxiliaire (4) de telle sorte que l'espace (11) soit réduit et que la au moins une couche de fibres de renfort (2) soit pressée contre la surface interne (12) de la cavité (10) du moule (9) par la surface externe (6) du corps auxiliaire (4)
f. Le durcissement du matériau de matrice (3) ;
g. Retirer de la cavité (10) la pièce composite à fibres creuse ou au moins partiellement creuse (1) comprenant la au moins une couche de fibres de renfort (2) incorporée dans le matériau de matrice (3).

2. Procédé selon la revendication 1, **dans lequel** la au moins une zone (7) est conçue comme un patin (14) et/ou une nervure (15) formant une partie intégrante du corps auxiliaire (4).

3. Procédé selon au moins l'une des revendications précédentes, **dans lequel** la au moins une zone (7) est conçue comme un insert (16) qui est intégré dans la surface externe (6) du corps auxiliaire (4) de telle sorte qu'une surface de montage (17) de l'insert (16) est affleurante avec la surface externe environnante (6) du corps auxiliaire (4).

4. Procédé selon la revendication 3, **dans lequel** l'au moins un insert (16) comprend une contre-dépouille (18) conçue pour être au moins partiellement entourée par le film extensible (5) du corps auxiliaire (4).

5. Procédé selon la revendication 4 , **dans lequel** la contre-dépouille (18) de l'insert (16) est conçue comme un chanfrein (19).

6. Procédé selon au moins l'une des revendications 3 à 5, **dans** lequel l'au moins un insert (16) est temporairement maintenu à l'intérieur d'une cavité (21) d'un outil (20) pour former le corps auxiliaire (4) par au moins un moyen d'aspiration (23) de telle sorte que l'insert (16) soit tiré contre la surface interne (22) de la cavité (21).

7. Procédé selon au moins l'une des revendications précédentes, **dans lequel** le corps auxiliaire (4) est formé par soufflage d'un film extensible (5).

8. Procédé selon au moins l'une des revendications précédentes, **dans lequel** le corps auxiliaire (4) est conçu de manière à être auto-stable à l'état rempli.

9. Procédé selon au moins l'une des revendications précédentes, **dans lequel** le corps auxiliaire (4) est retiré de la pièce composite à fibres (2) à l'extérieur de la cavité (10) du moule (9).

10. Procédé selon au moins l'une des revendications précédentes, **dans lequel** le corps auxiliaire (4) est constitué d'au moins deux parties (24) reliées entre elles le long d'au moins une jonction (25) par soudage ou collage.

11. Procédé selon au moins l'une des revendications précédentes, **dans lequel** le corps auxiliaire (4) comprend au moins deux chambres (26) interconnectées fluidiquement.

12. Procédé selon au moins l'une des revendications précédentes, **dans lequel** le procédé comprend un dispositif d'aide au positionnement (27) pour le clip de retenue (8), lequel dispositif d'aide au positionnement (27) est un cadre auxiliaire conçu comme un gabarit (28) pour positionner le au moins un clip de retenue (8).

13. Procédé selon au moins l'une des revendications précédentes, **dans lequel** la zone (7) de la surface externe (6) comprend une aide au positionnement (27) pour le clip de retenue (8) de telle sorte que le clip de retenue (8) soit disposé essentiellement au centre de la au moins une zone (7).

14. Corps auxiliaire remplissable (4) pour la fabrication d'une pièce composite à fibres (1) selon au moins l'une des revendications 1 à 13 , dans lequel le corps auxiliaire (4) est constitué d'un film extensible (5) délimitant un volume fermé et dans lequel le corps auxiliaire remplissable (4) comprend une surface externe (6) avec au moins une zone (7) adaptée pour recevoir un clip de retenue (8).
